# EUROPEAN PATENT APPLICATION

(11) **EP 1 739 967 A1**
(43) Date of publication of application: **03.01.2007**
(21) Application number: 06115758.2
(22) Date of filing: 20.06.2006
(51) Int. Cl.: H04N 7/16

(54) **Information processing apparatus capable of receiving digital broadcast program data, and method of protecting contents which is applied to the apparatus**

(30) Priority: 27.06.2005 JP 2005186941
(71) Applicant: KABUSHIKI KAISHA TOSHIBA, Tokyo 105-8001 (JP)
(72) Inventor: Nishigaki, Nobutaka Toshiba Corporation, Minato-ku Tokyo, 105-8001 (JP)
(74) Representative: Henkel, Feiler & Hänzel

(57) **Abstract**

According to one embodiment, a digital TV tuner module (204) receives digital broadcast program data including encrypted program contents. A descrambler (413) decrypts the program contents included in the received digital broadcast program data. A encryption unit (507) encrypts the decrypted program contents by an encryption key and outputs the encrypted program contents onto a PCI bus. A revocation information storage unit (502b) stores revocation information indicating that an information processing apparatus (10) is revoked. Revocation circuits (800, 900, 940, 920, A10, A20, A30) prevents any one of a plurality of devices (4, 110, 111, 113-116) from redistributing program contents outside the information processing apparatus (10) in accordance with the revocation information stored in the storage unit (502b).

## Description

The present invention relates to an information processing apparatus such as a personal computer. More specifically, the invention relates to an information processing apparatus capable of receiving digital broadcast program data and a method of protecting contents, which is applied to the apparatus.

In recent years, personal computers having the same audio video (AV) function as that of AV equipment such as a digital versatile disc (DVD) player and a television (TV) set have been developed. Most of the personal computers have a TV function of receiving and reproducing broadcast program data such as TV programs.

Recently, a system for protecting the copyright of broadcast program data (digital broadcast program data) has been requested in accordance with digitization of broadcasting. As a background to the copyright protection, program contents included in digital broadcast program data can be recorded and reproduced without degrading their images and voice. The recorded data can be duplicated without degradation.

Jpn. Pat. Appln. KOKAI Publication No. 2002-297452 (referred to as Publication 1 hereinafter) discloses a recording/reproduction apparatus for recording/reproducing digital contents data. This apparatus includes detecting means for detecting unauthorized use of information with the copyright and revoking means for revoking the apparatus as required when the unauthorized use is detected. The revoking means stops the recording/reproduction apparatus when the detecting means detects unauthorized use of information.

Jpn. Pat. Appln. KOKAI Publication No. 2003-67338 (referred to as Publication 2 hereinafter) discloses a system for protecting security of an electronic device. This system includes a security protection device for notifying an electronic device whose security is to be protected of the authorization and restriction of the use of the electronic device. Publication 2 describes that the electronic device has a startup control function. The startup control function inhibits the electronic device from starting up under the control of a Basic Input Output System (BIOS) when the security protection device does not notify the electronic device of the authorization of the use.

According to the technology of Publications 1 and 2, when an electronic device is used illegally, it can be revoked and prevented from starting up. With the technology of Publications 1 and 2 only, however, a system for preventing unauthorized use of program contents is not always easy to achieve in an information processing apparatus such as a personal computer that can receive digital broadcast program data. The reason is as follows. This type of information processing apparatus includes various devices for processing program contents as well as for recording/reproducing the program contents and for allowing the information processing apparatus to output data such as program contents.

An object of the present invention is to provide an information processing apparatus which can receive digital broadcast program data and easily prevent program contents from being illegally distributed outside the apparatus.

According to an embodiment of the present invention, there is provided an information processing apparatus, comprising a digital television tuner module configured to receive digital broadcast program data including encrypted program contents, a plurality of devices which output data to an external device, a bus which transfers data, a descrambler configured to decrypt the program contents included in the received digital broadcast program data, an encryption unit configured to encrypt the decrypted program contents using an encryption key and output the encrypted program contents onto the bus, a storage unit which stores revocation information indicating that a revocation process to disable the information processing apparatus from decrypting program contents by the descrambler have been performed by a broadcast station which distributes digital broadcast program data, and prevention means for preventing, in accordance with the revocation information stored in the storage unit, any one of the devices from redistributing program contents outside the information processing apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing an exemplary outward appearance of a computer according to an embodiment of the present invention;
FIG. 2 is a block diagram of an exemplary system configuration of the computer shown in FIG. 1;
FIG. 3 is a diagram of an exemplary data format of a TS packet that is formed of broadcast program data received by the computer shown in FIG. 1;
FIG. 4 is an illustration of a process of descrambling broadcast contents in the computer shown in FIG. 1;
FIG. 5 is a block diagram of an exemplary configuration of a Rights Management and Protection LSI provided in the computer shown in FIG. 1;
FIG. 6 is an illustration of a series of procedures from reception of a terrestrial digital television broadcast until reproduction thereof, which is performed by the computer shown in FIG. 1;
FIG. 7 is a diagram showing an exemplary PID table provided in the computer shown in FIG. 1, which includes defined PID values;
FIG. 8 is a block diagram showing an exemplary configuration of a revocation circuit for revoking an HDMI-IF provided in the computer shown in FIG. 1;
FIGS. 9A to 9C are block diagrams each showing an exemplary configuration of a revocation circuit for revoking a LAN controller, an ODD and a USB interface which are provided in the computer shown in FIG. 1;
FIGS. 10A to 10C are block diagrams each showing an exemplary configuration of a revocation circuit for revoking a card controller, a wireless LAN controller and an IEEE 1394 controller which are provided in the computer shown in FIG. 1;
FIG. 11 is a flowchart showing an exemplary process for controlling the startup of a TV application program, which is applied to the embodiment of the present invention;
FIG. 12 is a flowchart showing an exemplary process performed by a BIOS when the computer shown in FIG. 1 is revoked, which is applied to a modification to the embodiment of the present invention; and
FIG. 13 is a flowchart showing an exemplary process performed by the BIOS when the computer shown in FIG. 1 is powered on, which is applied to the modification to the embodiment of the present invention.

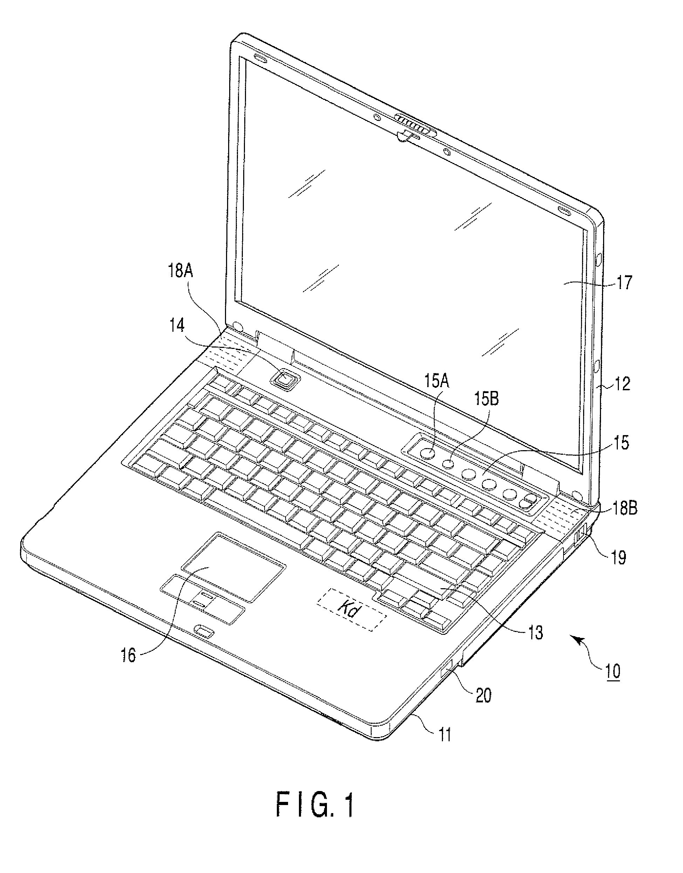

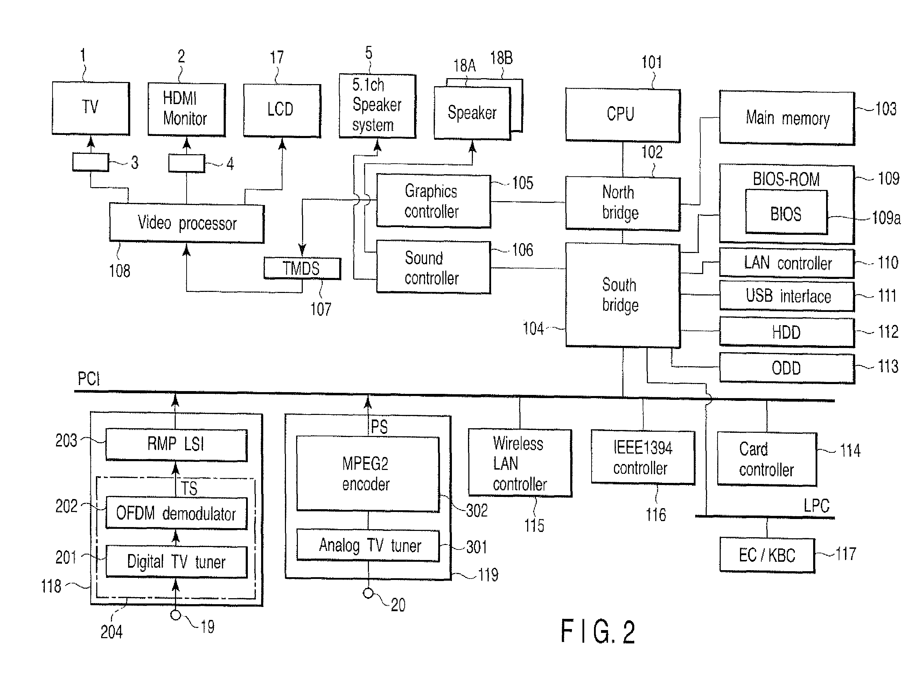

An embodiment of the present invention will be described with reference to the accompanying drawings. Referring first to FIGS. 1 and 2, a configuration of an information processing apparatus according to the embodiment of the present invention will be described. The information processing apparatus is implemented as, for example, a notebook personal computer 10.

FIG. 1 is a perspective view of the notebook personal computer 10 whose display unit is open. The computer 10 includes a main body 11 and a display unit 12. The display unit 12 incorporates a display device that is composed of a thin film transistor liquid crystal display (LCD) 17. The display screen of the LCD 17 is located in almost the central part of the display unit 12.

The display unit 12 is attached to the main body 11 such that it can turn between its open position and closed position. The main body 11 has a thin box-shaped housing. A keyboard 13, a power button 14, an input operation panel 15, a touch pad 16 and speakers 18A and 18B are arranged on the top surface of the main body 11. The speakers 18A and 18B compose a two-channel speaker system. The power button 14 is used to power on/power off the computer 10.

The input operation panel 15 is an input device for inputting an event corresponding to a depressed button. The panel 15 includes a plurality of buttons for starting their respective functions. These buttons include a TV start button 15A and a DVD/CD start button 15B. The TV start button 15A is used to start a TV function of reproducing, viewing and recording TV broadcast program data. When a user depresses the TV start button 15A, a TV application program for performing the TV function starts.

The computer 10 is installed with a sub-operating system dedicated to audio/video (AV) data processing as well as a general-purpose main operating system. The TV application program is a program that runs on the sub-operating system.

When the user depresses the power button 14, the main operating system starts. When the user depresses the TV start button 15A, not the main operating system but the sub-operating system starts. As the sub-operating system starts, the TV application program is automatically executed. The sub-operating system has only the minimum function of carrying out an AV function. Thus, a time period required for booting up the sub-operating system is much shorter than a time period required for booting up the main operating system. The user can view/record a TV program promptly by simply depressing the TV start button 15A.

The computer 10 can receive and reproduce both a terrestrial digital TV broadcast and a terrestrial analog TV broadcast. An antenna terminal 19 for terrestrial digital TV broadcasting and an antenna terminal 20 for terrestrial analog TV broadcasting are provided on the right side of the main body 11 of the computer 10. In the terrestrial digital TV broadcasting, the contents of broadcast program data (program contents) are scrambled (encrypted). In order to process the scrambled broadcast program data, the main body 11 incorporates a storage unit in which device identification information is stored in advance. The storage unit is included in an LSI exclusively for protecting the copyright of digital broadcast program data. The device identification information is used as a device key (Kd) necessary for descrambling the scrambled broadcast program data. The device identification information is an ID that contains information for identifying the model of the computer 10. More specifically, the device identification information contains a model ID for identifying the model of the computer 10 and a device key Kd corresponding to the model ID. The device identification information can contain information for identifying the manufacturer of the computer 10, e.g., a manufacturer ID for identifying the manufacturer of the computer 10 and a device key Kd corresponding to the manufacturer ID. Hereinafter, the model ID (manufacturer ID) will be referred to as a device ID.

In the terrestrial digital TV broadcasting, a stream of multiplexed broadcast program data is broadcasted by broadcast waves. The stream includes program contents, common information (Entitlement Control Message: ECM) and some different information items (Entitlement Management Messages: EMMs). The program contents are encrypted (scrambled) by a scramble key Ks. The ECM is obtained by encrypting the scramble key Ks by a work key Kw (second encryption key). The EMMs are each obtained by encrypting the work key Kw by device identification information (device key Kd on a pseudo-basis) corresponding to each of authorized receiving terminals. Each of the EMMs includes its corresponding device ID.

The computer 10 generates the scramble key Ks using the ECM and EMMs included in the broadcast program data and the device key Kd concealed in the computer 10. The scramble key Ks is used to descramble (decrypt) the scrambled program contents. The device key Kd is used to decrypt an EMM including the device ID of the computer 10 into a work key Kw. The work key Kw is used to decrypt the ECM into a scramble key Ks. If the ECM and EMMs are combined into information ECM/EMM, the information ECM/EMM can be said to be information obtained by encrypting the scramble key Ks by the device key Kd.

In the computer 10, the device key Kd is stored in the storage unit (EEPROM 502 described later) in the LSI of the computer 10. The storage unit is so configured that it cannot be accessed from outside the LSI. The device key Kd can thus easily be prevented from leaking without using a special tamper-resistant technique. Accordingly, the copyright of broadcast program data can be protected without using the BS Conditional Access System (B-CAS) card.

The DVD/CD start button 15B is a button for reproducing, e.g., video contents from digital versatile disc (DVD) media or compact disc (CD) media. Even when a user depresses the DVD/CD start button 15B, a video reproducing application program for reproducing video contents starts. This video reproducing application program also runs on the sub-operating system. Even when the user depresses the DVD/CD start button 15B, not the main operating system but the sub-operating system starts and the video reproducing application program is automatically executed.

Referring then to FIG. 2, an exemplary system configuration of the computer 10 will be described. As shown in FIG. 2, the computer 10 includes a CPU 101, a north bridge 102, a main memory 103, a south bridge 104, a graphics controller 105, a sound controller 106, a transition minimized differential signaling (TMDS) circuit 107, a video processor 108, a BIOS-ROM 109, a local area network (LAN) controller 110, a universal serial bus (USB) interface 111, a hard disk drive (HDD) 112, an optical disk drive (ODD) 113, a card controller 114, a wireless LAN controller 115, an IEEE 1394 controller 116, an embedded controller/keyboard controller IC (EC/KBC) 117, a digital TV broadcast receiving unit 118 and an analog TV broadcast receiving unit 119.

The CPU 101 is a processor for controlling an operation of the computer 10. The CPU 101 executes the main operating system/sub-operating system and various application programs such as a TV application program. These main operating system/sub-operating system and application programs are loaded into the main memory 103 from the HDD 112. The CPU 101 executes a basic input output system (BIOS) 109a stored in the BIOS-ROM 109. The BIOS 109a is a program for control of hardware.

The north bridge 102 is a bridge device that connects a local bus of the CPU 101 and the south bridge 104. The north bridge 102 incorporates a memory controller for controlling access to the main memory 103. The north bridge 102 has a function of communicating with the graphics controller 105 via an accelerated graphics port (AGP) bus, a serial bus of the PCI express standard, and the like.

The graphics controller 105 is a display controller for controlling the LCD 17 that is used as a display monitor of the computer 10. The video data generated by the graphics controller 105 is transmitted to the video processor 108 via the TMDS circuit 107. The video processor 108 performs a video process (image-quality control process) for improving the image quality of video data transmitted from the graphics controller 105. The video data whose image quality is improved by the video processor 108 can be transmitted to an external TV set 1 and an external high-definition multimedia interface (HDMI) monitor 2 via a TV interface (TV-IF) 3 and an HDMI interface (HDMI-IF) 4, respectively. These interfaces 3 and 4 are display output interfaces provided in the main body 11 of the computer 10.

The south bridge 104 controls devices on a Low Pin Count (LPC) bus and devices on a Peripheral Component Interconnect (PCI) bus. The south bridge 104 incorporates an Integrated Drive Electronics (IDE) controller for controlling the HDD 112 and ODD 113. The south bridge 104 has a function of communicating with the sound controller 106. The sound controller 106 is a sound source device, and supplies audio data to be reproduced to the speakers 18A and 18B or an external 5.1-channel speaker system.

The LAN controller 110 is a communication interface for controlling communication between the main body 11 and a network (LAN). The USB interface 111 is also a communication interface for performing communication between an external device connected thereto via a serial bus (USB) and the main body 11. The card controller 114 is a device that controls write/read of data to/from an insertable card (recording medium) such as a PC card and a secure digital (SD) card. The wireless LAN controller 115 is a wireless communication interface (wireless communication device) that performs wireless communication of, e.g., the IEEE 802.11 standard. The IEEE 1394 controller 116 is a communication interface that performs communication between an external device and the main body 11 via a serial bus of the IEEE 1394 standard. The EC/KBC 117 is a single-chip microcomputer on which an embedded controller for managing power and a keyboard controller for controlling the keyboard (KB) 13 and the touch pad 16 are integrated. The EC/KBC 117 has a function of powering on/powering off the computer 10 in accordance with a user's depression of the power button 14. Further, the EC/KBC 117 has another function of powering on the computer 10 in accordance with a user's depression of the TV start button 15A or the DVD/CD start button 15B.

The digital TV broadcast receiving unit 118 receives and processes a digital broadcast program such as a terrestrial digital TV broadcast. The receiving unit 118 is connected to the antenna terminal 19. The receiving unit 118 includes a digital TV tuner 201, an orthogonal frequency division multiplexing (OFDM) demodulator 202 and a Rights Management and Protection (RMP) LSI 203. The digital TV tuner 201 and OFDM demodulator 202 serve as a digital TV tuner module 204 that receives broadcast program data of terrestrial digital TV broadcasting. In the terrestrial digital TV broadcasting, Moving Pictures Experts Group 2 (MPEG2) is used as a method of compressing and encoding broadcast program data (video data and audio data). As a video format, both standard definition (SD) and high definition (HD) can be used.

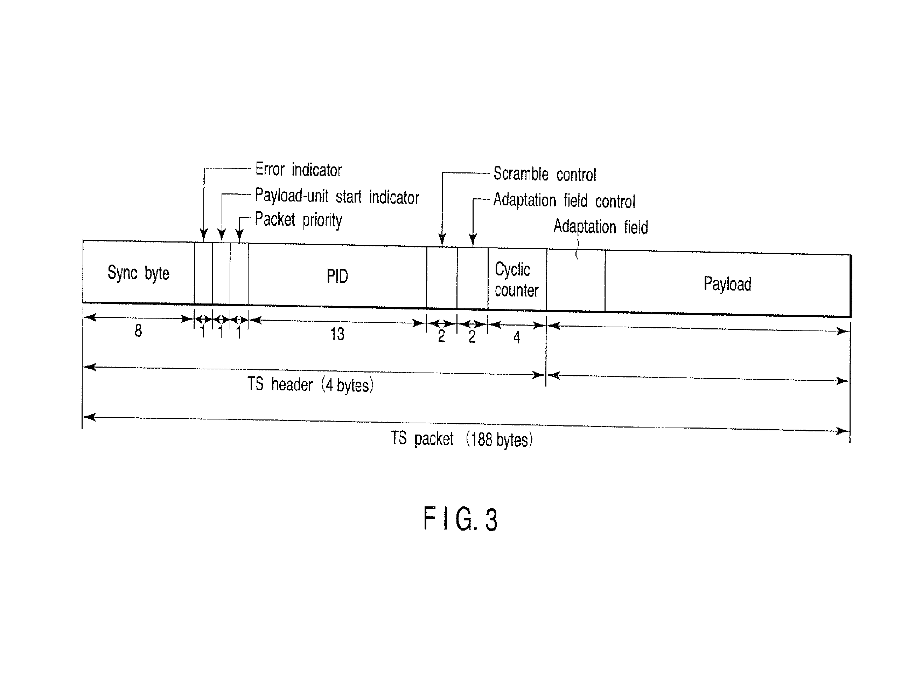

A transport stream includes the EMMs and ECM as well as the broadcast contents scrambled by the scramble key Ks. The transport stream is composed of continuous transport stream (TS) packets. As shown in FIG. 3, each of the TS packets is a fixed-length packet of 188 bytes and includes a header and a payload. The header is a fixed-length header of 4 bytes and includes a packet ID (PID) of 13 bits. The PID is used to identify information included in the payload of a TS packet corresponding thereto. More specifically, it is used to identify a program, the type of contents (audio or video), the type of information (EMM or ECM), and control information such as a program. Each of TS packets belonging to the same broadcast program has a PID designated by a PID table corresponding to the broadcast program.

The RMP LSI 203 is an LSI exclusively for achieving Rights Management and Protection (RMP) of broadcast contents. The LSI 203 previously stores a device ID and a device key Kd both corresponding to the computer 10. The LSI 203 generates a scramble key Ks using the ECM and EMMs included in the transport stream and the device key Kd. The LSI 203 descrambles the broadcast contents by the scramble key Ks to decrypt the broadcast contents. The LSI 203 has a PID filtering function of extracting TS packets, which include a PID corresponding to a target broadcast program, from the transport stream. With the PID filtering function, only TS packets corresponding to a broadcast program to be viewed and recorded can be transmitted to the TV application program.

The RMP LSI 203 has a function of again encrypting the TS packets extracted by the PID filtering function. This encryption is carried out using an encryption key that the LSI 203 and the TV application program have in common. The encryption key differs from the scramble key. The encrypted program contents can be transferred to the main memory 103 via the PCI bus. Even though program contents are illegally extracted via the PCI bus, they can be prevented from being reproduced. The encrypted program contents can be recorded in the HDD 112 as recorded data. The encrypted program contents recorded in the HDD 112 can be decrypted and reproduced by the TV application program.

The RMP LSI 203 has a function of holding revocation information indicating that the computer 10 is revoked. This revocation is performed by a broadcast station when the leakage of a key (device key or encryption key) concealed in the computer is found. The revocation information is used as control information for preventing the revoked computer 10 from redistributing program contents to an external device. More specifically, the revocation information is used to revoke (disable) the functions of a device capable of redistributing program contents to an external device, such as the HDMI interface 4, LAN controller 110, USB interface 111, ODD 113, card controller 114, IEEE 1394 controller 116 and wireless LAN controller 115.

The analog TV broadcast receiving unit 119 receives and processes analog broadcast program data such as a terrestrial analog TV broadcast. The receiving unit 119 is connected to the antenna terminal 20 and includes an analog TV tuner 301 and an MMPEG2 encoder 302. The analog TV tuner 301 is a tuner module that receives the analog broadcast program data. The tuner 301 receives a broadcast signal of a specific channel from TV broadcast signals input through the antenna terminal 20. The broadcast program data received by the analog TV tuner 301 is transmitted to the MPEG2 encoder 302. The MPEG2 encoder 302 compresses and encodes the broadcast program data by the encoding method of the MPEG standard to generate a program stream (PS) of multiplexing of compressed and encoded video data and audio data.

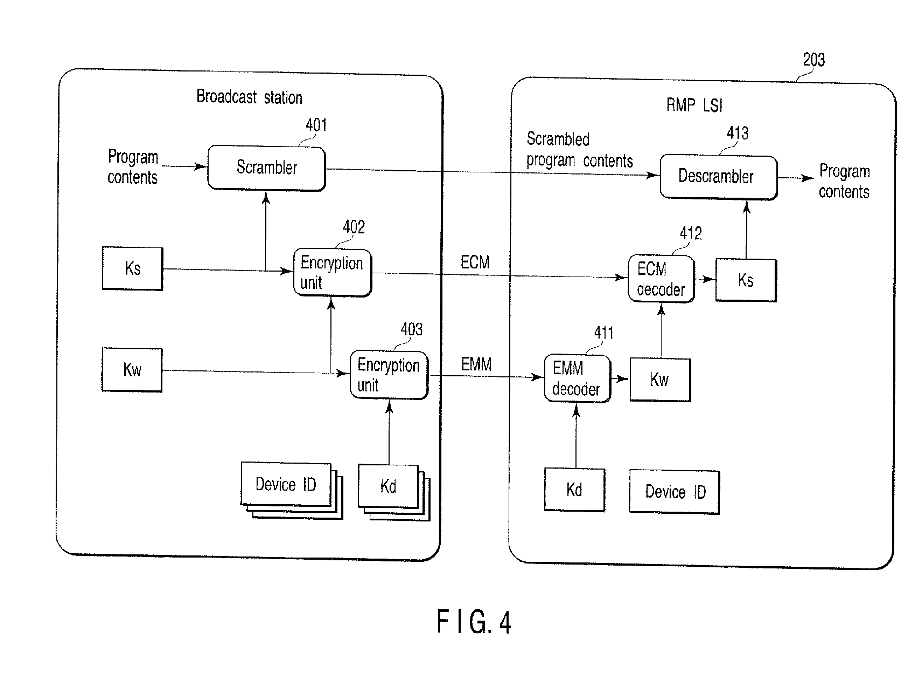

The systems for scrambling/descrambling broadcast contents and for revoking the computer will be described with reference to FIG. 4. A broadcast station includes a scrambler 401 and encryption units 402 and 403. In the broadcast station, both a device ID and a device key Kd are managed for each of authorized receiving terminals (or manufacturers). The scrambler 401 encrypts (scrambles) broadcast program data (program contents) by the scramble key Ks. The encryption unit 402 encrypts a scramble key Ks by a work key Kw to generate an ECM including the encrypted scramble key Ks. The encryption unit 403 encrypts work keys Kw by device keys Kd corresponding to device IDs to generate EMMs including the encrypted work keys Kw. The device IDs are added to their corresponding EMMs. The scramble keys Ks and work keys Kw are encrypted by, for example, the Advanced Encryption Standard (AES).

The RMP LSI 203, which protects the copyright of the computer 10 as a receiving terminal, includes an EMM decoder 411, an ECM decoder 412 and a descrambler 413. The EMM decoder 411 decodes an EMM by a device key Kd stored in the LSI 203 to generate a work key Kw. In this case, the EMM decoder 411 identifies an EMM corresponding to the device ID of the computer 10 from among the EMMs and decodes the identified EMM by the device key Kd. The ECM decoder 412 decodes an ECM by the generated work key Kw to generate a scramble key Ks. The descrambler 413 decodes (descrambles) program contents by the generated scramble key Ks.

When the leakage of a key concealed in the main body 11 is found, the EMM included in the transport stream transmitted from the broadcast station and corresponding to the device ID of the computer 10, includes encryption information that is irrelevant to the work key Kw. Even though the EMM decoder 411 decodes the EMM corresponding to the device ID of the computer 10 by the device key Kd, a correct work key Kw cannot be generated. Thus, the ECM decoder 412 cannot generate a correct scramble key Ks or the descrambler 413 cannot decrypt (descramble) program contents correctly. In other words, the broadcast station can revoke the computer 10 by varying the EMM corresponding to the device ID of the computer 10 in which the leakage of a key has been found. The program contents can be prevented from being decrypted (descrambled) by the descrambler 413. However, the program contents, which are decrypted by the descrambler 413, then encrypted again, and recorded in the HDD 112, cannot be necessarily prevented from being decrypted because of the leakage of the key. In the present embodiment, even though the program contents already recorded are decrypted by the computer 10, they can be prevented from being redistributed outside the revoked computer 10. This system will be described later.

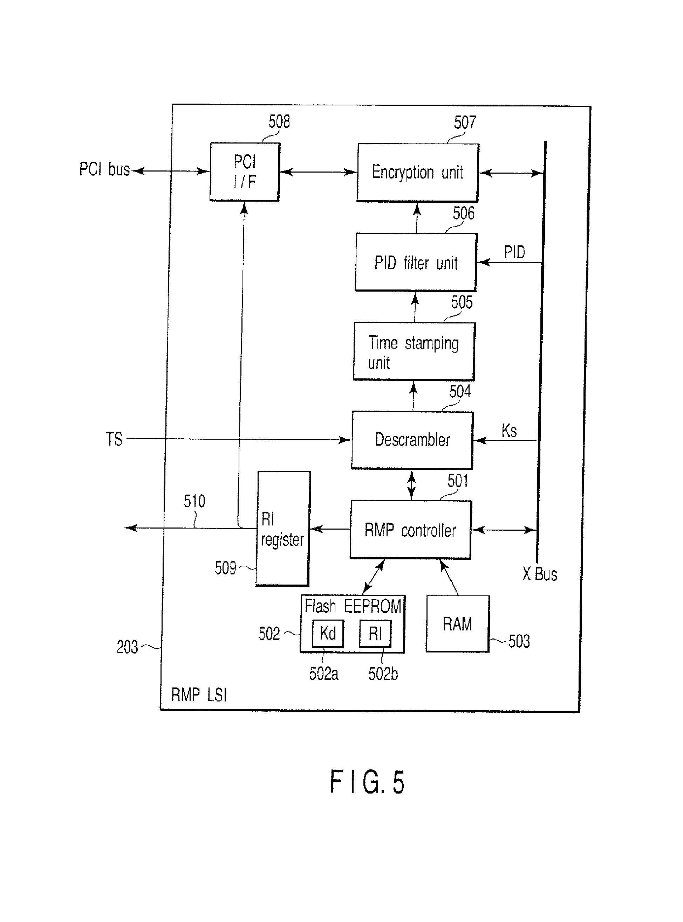

An exemplary configuration of the RMP LSI 203 will be described with reference to FIG. 5. The RMP LSI 203 includes an RMP controller 501, a flash electrically erasable and programmable read only memory (EEPROM) 502, a RAM 503, a descrambler 504, a time stamping unit 505, a PID filter unit 506, an encryption unit 507, a PCI interface (PCI I/F) 508 and a revocation information register (RI register) 509.

The RMP controller 501 is a microcomputer that controls an operation of the RMP LSI 203 and performs a process to generate the scramble key Ks. Assume that the EMM decoder 411 and ECM decoder 412 shown in FIG. 4 are implemented by the process of the RMP controller 501. The flash EEPROM 502 is a rewritable nonvolatile memory and secures a device identification information storage unit 502a and a revocation information storage unit 502b. The storage unit 502a previously stores the device key Kd and device Id (a pair of items of device identification information). The storage unit 502b stores revocation information indicating whether the computer 10 is revoked by the broadcast station. The flash EEPROM 502 is so configured that it cannot be accessed from outside the RMP LSI 203. The RAM 503 is used as a work memory of the RMP controller 501.

The descrambler 504 corresponds to the descrambler 413 shown in FIG. 4. In FIG. 5, the descrambler 413 is represented as the descrambler 504 for the sake of convenience. The descrambler 504 descrambles each scrambled transport stream (TS) packet (188-byte length) by the scramble key Ks generated by the RMP controller 501. The descrambled TS packet is sent to the time stamping unit 505. The time stamping unit 505 adds a time stamp of 4-byte length to the head of the descrambled TS packet of 188-byte length to generate a packet of 192-byte length. The time stamp represents the temporal order of TS packets. If the time stamping unit 505 converts a TS packet into a 192-byte-length packet with a time stamp, the encryption unit 507 can perform its encryption process with efficiency. The encryption process will be described later.

The PID filter unit 506 monitors the PID of a TS packet and extracts only a TS packet group necessary for reproducing a program to be viewed. More specifically, the PID filter unit 506 extracts a TS packet group corresponding to broadcast program data to be viewed from TS packet groups included in the descrambled transport stream on the basis of the PID of each of the TS packet groups. The broadcast program data to be viewed is indicated by the CPU 101. The packets of the packet group extracted by the PID filter unit 506 are transmitted to the encryption unit 507.

The encryption unit 507 carries out an encryption process for each packet of 192-byte length. The encryption process is done using the AES technique that is the same as the encryption of ECM and EMM. The encryption unit 507 encrypts a packet of 192-byte length for each block of 128-bit length using an encryption key whose block size is 128 bits. The packet of 192-byte length is divided into twelve blocks each having a 128-bit length, and the packet is encrypted for each of the blocks. The encrypted packet with a time stamp is supplied to the PCI interface 508.

A computation circuit of the encryption unit 507 that is compliant with the AES technique is used for computation for decryption of ECM and EMM. The RMP controller 501 receives an EMM from the PID filter unit 506. The RMP controller 501 supplies the EMM and device key Kd to the encryption unit 507 to cause the unit 507 to decrypt the EMM. The RMP controller 501 can thus acquire the work key Kw from the encryption unit 507. The RMP controller 501 also receives an ECM from the PID filter unit 506. The RMP controller 501 supplies the ECM and work key Kw to the encryption unit 507 to cause the unit 507 to decrypt the ECM. The RMP controller 501 can thus acquire the scramble key Ks from the encryption unit 507.

As described above, the RMP controller 501 decrypts the EMM and ECM using the encryption unit 507. Any computation circuit for AES encryption need not be mounted in the RMP controller 501 and accordingly the LSI 203 can be simplified. When the descrambler 504 does not descramble a transport stream (TS) packet (program contents) correctly and thus it is determined that the descramble is impossible, the RMP controller 501 functions as follows. The RMP controller 501 stores revocation information indicating that the computer 10 is revoked in the revocation information storage unit 502b of the flash EEPROM 502, and sets the revocation information in the RI register 509. The revocation information is represented by, e.g., one bit. The revocation information is flag information indicating that the computer 10 is not revoked when the revocation information is "1" (e.g., high level) and indicating that the computer 10 is revoked when it is "0" (low level).

The one-bit revocation information held in the RI register 509 is sent out to a revocation control line 510. The revocation control line 510 is used to revoke the functions of the HDMI interface 4, LAN controller 110, USB interface 111, ODD 113, card controller 114, IEEE 1394 controller 116 and wireless LAN controller 115 in order to prevent the computer 10 from redistributing program contents to an external device. The revocation information held in the RI register 509 can be read out of the BIOS 109a via the PCI bus. In the present embodiment, when the computer 10 is powered on, the RMP controller 501 reads the revocation information out of the revocation information storage unit 502b secured in the flash EEPROM 502 and resets it in the RI register 509.

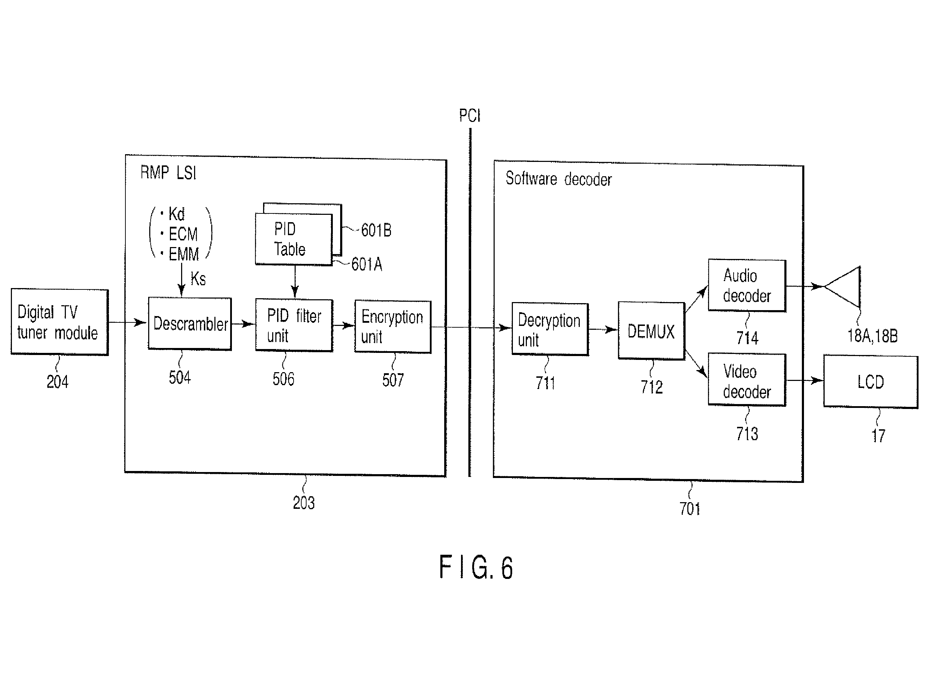

A series of procedures from reception of a terrestrial digital television broadcast until reproduction thereof will be described with reference to FIG. 6. The digital TV tuner module 204 receives broadcast program data of the terrestrial digital television broadcast. The received broadcast program data is composed of the scrambled transport stream, as described above. The transport stream is transmitted to the RMP LSI 203.

In the RMP LSI 203, the transport stream is descrambled by the descrambler 504. This descramble is performed by the scramble key Ks that is generated from the ECM, EMM and device key Kd as described above. The TS packets that compose the descrambled transport stream are transmitted to the PID filter unit 506. The PID filter unit 506 includes a PID table having forty-eight entries. The PID filter unit 506 refers to the PID table and determines whether each of the TS packets descrambled by the descrambler 504 should be extracted.

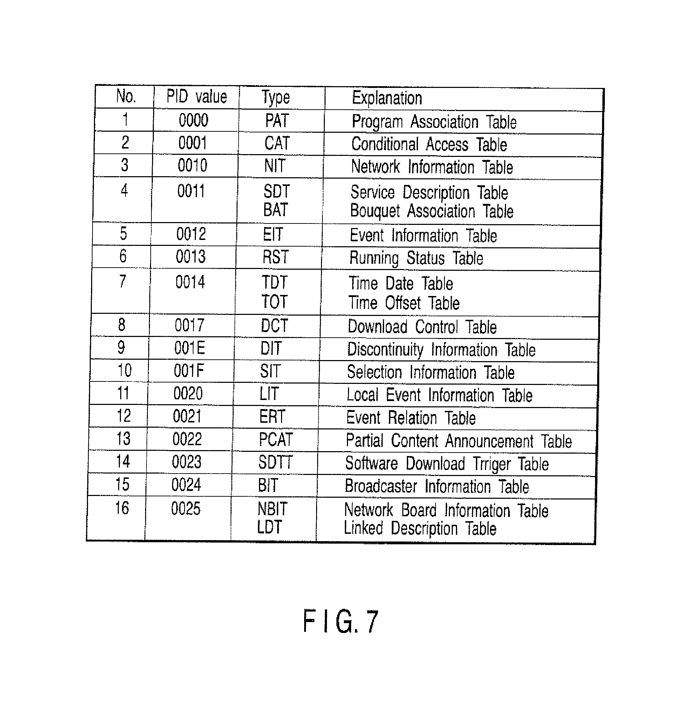

The PID table includes a PID table 601A that holds a plurality of defined PID values and a PID table 601B that holds a plurality of designated PID values. The defined PID values are PID values for identifying TS packets including various items of control information defined by the standard of the terrestrial digital television broadcast. The PID table 601A holds sixteen defined PID values as shown in FIG. 7. The designated PID values are PID values for identifying a TS packet regarding a broadcast program to be viewed, and they are set in the PID table 601B by the RMP controller 501.

The PID filter unit 506 refers to the PID tables 601A and 601B and extracts a TS packet group including PID values that coincides with any of PID values set in the PID tables 601A and 601B, from descrambled TS packets. The PID filter unit 506 compares each of the PID values included in the descrambled TS packets and each of the PID values set in the PID tables 601A and 601B. The PID filter unit 506 determines whether the PID values included in the descrambled TS packets coincides with any of the PID values set in the PID tables 601A and 601B. When they coincide with each other, the PID filter unit 506 sends the descrambled TS packets to the encryption unit 507.

The encryption unit 507 encrypts each of the TS packets supplied from the PID filter unit 506 and outputs the encrypted TS packet onto the PCI bus. Thus, a partial transport stream including only the encrypted TS packets regarding a broadcast program to be viewed is transferred to the main memory 103 via the PCI bus.

The TV application program includes a software decoder 701. The software decoder 701 is a program that causes the CPU 101 to receive and reproduce a partial transport stream from the RMP LSI 203. The software decoder 701 has a decryption unit 711, a demultiplexer (DEMUX) 712, a video decoder 713 and an audio decoder 714 as functional modules.

The decryption unit 711 decrypts the TS packets included in the partial transport stream using an encryption key that the unit 711 and the LSI 203 have in common. The partial transport stream so decrypted is transmitted to the demultiplexer 712. The demultiplexer 712 separates the decrypted partial transport stream into TS packets containing video data and TS packets containing audio data. The former TS packets are sent to the video decoder 713, while the latter TS packets are sent to the audio decoder 714.

The video decoder 713 decodes (expands) video data. The decoded video data is displayed on, for example, the LCD 17 via the graphics controller 105, TMDS 107 and video processor 108. Further, the decoded video data can be improved in image quality by the video processor 108 and then displayed on the external TV set 1 or HDMI monitor via the IV-IF 3 or HDMI-IF 4. On the other hand, the audio decoder 714 decodes (expands) audio data. The decoded audio data is output from, for example, speakers 18A and 18B via the sound controller 106.

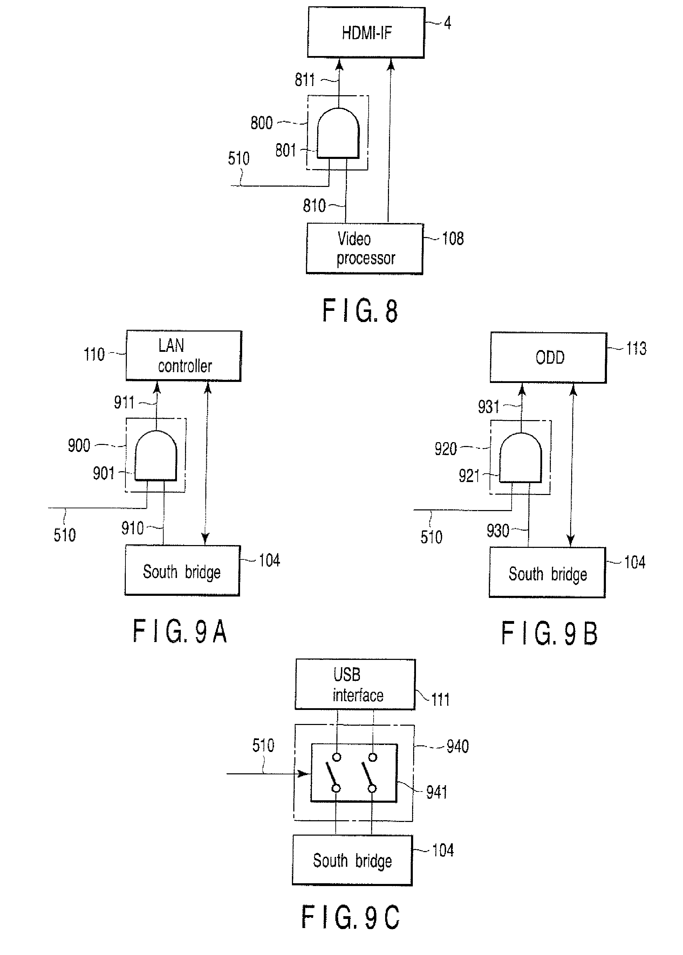

The system for revoking the function of a device capable of redistributing program contents will be described with reference to FIGS. 8 to 10. FIG. 8 is a block diagram showing a configuration of a revocation circuit 800 that revokes (disables) the HDMI-IF 4 in accordance with the signal level of the revocation control line 510. The revocation circuit 800 includes an AND gate 801. The AND gate 801 is supplied with a device select signal 810 from the video processor 108. In accordance with the signal level of the revocation control line 510 or the level (high level or low level) of one-bit revocation information, the AND gate 801 outputs the device select signal 810 to the HDMI-IF 4 as a device select signal 811 having the same level as that of the signal 810 or as a device select signal 811 having a low level.

The device select signal 810 is set at a high level when the video processor 108 uses the HDMI-IF 4. If the signal level of the revocation control line 510 is high, or if the revocation information indicates that the computer 10 is not revoked, the level of the device select signal 811 becomes high and, in this case, the HDMI-IF 4 is selected and enabled. In contrast, if the signal level of the revocation control line 510 is low, or if the revocation information indicates that the computer 10 is revoked, the AND gate 801 forcibly sets the device select signal 811 to a low level, irrespective of the level of the device select signal 810. In this case, the HDMI-IF 4 is not selected but disabled and its function is revoked. Even though the program contents recorded in, e.g., the HDD 112 are illegally decrypted, they can be prevented from being redistributed to an external device (external HDMI monitor 2) via the HDMI-IF 4. When the revocation information indicates that the computer 10 is revoked, the TV-IF 3 can be disabled by the same system as that of the revocation circuit 800. In this case, the program contents can be prevented from being redistributed to an external device (external TV set 1) via the TV-IF 3.

FIGS. 9A, 9B and 9C are block diagrams showing revocation circuits 900, 920 and 940 that revoke the LAN controller 110, ODD 113 and USB interface 111, respectively, each of which is connected to the south bridge 104, in accordance with the signal level of the revocation control line 510. The revocation circuits 900 and 920 shown in FIGS. 9A and 9B include AND gates 901 and 921, respectively, like the revocation circuit 800. The AND gates 901 and 921 are supplied with device select signals 910 and 920, respectively, from the south bridge 104. In accordance with the signal level of the revocation control line 510, the AND gates 901 and 921 output the device select signals 910 and 920 to the LAN controller 110 and ODD 113 as device select signals 921 and 922 having the same levels as those of the signals 910 and 920 or as device select signals 921 and 922 each having a low level.

If the signal level of the revocation control line 510 is low, the AND gates 901 and 921 forcibly set their respective device select signals 921 and 922 to a low level, irrespective of the levels of the device select signals 910 and 920. In this case, the LAN controller 110 and ODD 113 are disabled. Even though the program contents recorded in, e.g., the HDD 112 are illegally decrypted, they can be prevented from being redistributed to an external device via the LAN controller 110 and ODD 113.

When the signal level of the revocation control line 510 is low, the ODD 113 is not disabled but can be set in such a manner that only data write is inhibited (only a data write function is revoked). In this case, too, program contents can be prevented from being recorded on an optical disk medium detachably mounted on the ODD 113, such as a DVD media. The information recorded on the DVD media can be read out.

The revocation circuit 940 shown in FIG. 9C includes a switch 941 that selects one of connection and disconnection between the south bridge 104 and USB interface 111. The switch 941 connects the south bridge 104 and USB interface 111 to each other when the signal level of the revocation control line 510 is high. On the other hand, it disconnects them from each other when it is low. The program contents can thus be prevented from being redistributed to an external device via the USB interface 111.

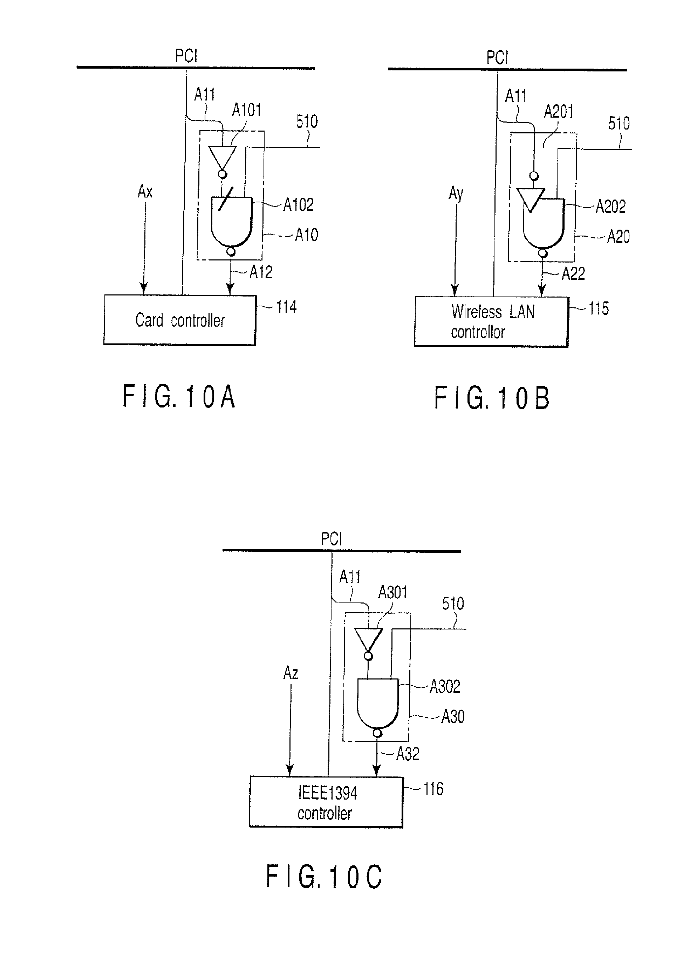

FIGS. 10A, 10B and 10C are block diagrams showing revocation circuits A10, A20 and A30 that revoke the card controller 114, wireless LAN controller 115 and IEEE 1394 controller 116, respectively, each of which is connected to the PCI bus, in accordance with the signal level of the revocation control line 510. The revocation circuits A10, A20 and A30 include inverters A101, A201 and A301 and NAND gates A102, A202 and A302, respectively. The inverters A101, A201 and A301 are each supplied with a device select signal A11 from the PCI bus. The device select signal A11 is enabled (true) at a low level. The inverters A101, A201 and A301 invert the level of the device select signal A11. In accordance with the signal level of the revocation control line 510 or the level (high level or low level) of one-bit revocation information, the NAND gates A102, A202 and A302 output the device select signal A11 to the controllers 114, 115 and 116 as device select signals A12, A22 and A32 each having the same level as the inverted level of the signal A11 or as device select signals A12, A22 and A32 each having a high level.

Specific bits Ax, Ay and Az in address information on the PCI bus are assigned to the controllers 114, 115 and 116, respectively. The controllers 114, 115 and 116 are therefore selected and enabled only when the device select signals A12, A22 and A32 are set at a high level and the specific bits Ax, Ay and Az are logic "1."

When the signal level of the revocation control line 510 is low, the device select signals A12, A22 and A32 are forcibly set at a high level, irrespective of the level of the device select signal A11 and, in this case, the controllers 114, 115 and 116 are not selected but disabled. The program contents can thus be prevented from being redistributed to an external device via the controllers 114, 115 and 116.

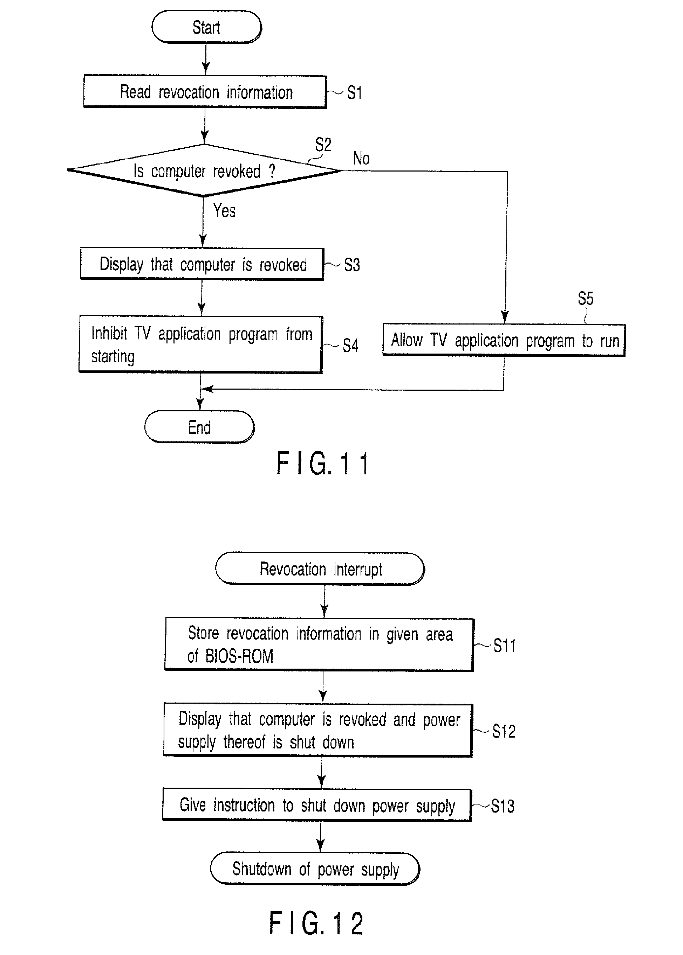

A process of controlling the startup of a TV application program will be described with reference to the flowchart shown in FIG. 11. As described above, the BIOS-ROM 109 stores the BIOS 109a. The CPU 101 executes the BIOS 109a to control hardware. For the sake of brevity, hereinafter, assume that the BIOS 109a controls hardware.

First, the BIOS 109a can read revocation information out of the RI register 509 included in the RMP LSI 203 via the PCI bus. When a user depresses the TV start button 15A, the BIOS 109a reads revocation information out of the RI register 509 (step S1). Based on the read revocation information, the BIOS 109a determines whether the computer 10 is revoked (step S2). If the computer 10 is revoked, the BIOS 109a causes the LCD 17 to display an alarm indicating that the computer 10 is revoked (step S3). The BIOS 109a inhibits the TV application program from running on the sub-operating system (step S4). Accordingly, the software decoder 701 is inhibited from starting up, and the program contents that have been recorded in, e.g., the HDD 112 can be prevented from being decrypted. On the other hand, when the computer 10 is not revoked, the BIOS 109a allows the TV application program to run on the sub-operating system (step S5).

The revocation control line 510 can be used as a revocation interrupt signal line to interrupt the BIOS 109a. A revocation interrupt occurs in the BIOS 109a when the revocation control line 510 changes from a high level to a low level as a result of setting revocation information of logic "0" in the RI register 509. In accordance with the revocation interrupt, the BIOS 109a stores revocation information indicating that the computer 10 is revoked in a given storage area (revocation information storage unit) that is reserved in advance as a revocation information storage unit in the BIOS-ROM 109. After that, the BIOS 109a can determine whether the computer 10 is revoked with reference to the given storage area in the

### BIOS-ROM 109.

The BIOS 109a can be configured to read revocation information out of the RI register 509, for example, on a regular basis. Based on the revocation information, the BIOS 109a determines whether the computer 10 is revoked. When it is revoked, the BIOS 109a stores revocation information indicating the revocation in the given storage area in the BIOS-ROM 109.

In the present embodiment, a device capable of outputting data outside the computer 10 can be revoked by a broadcast station, as described above. Program contents can thus be prevented from being redistributed illegally outside the computer 10 revoked by the broadcast station. Furthermore, the device capable of outputting data outside the computer 10 is only revoked, and the computer 10 is enabled except for some functions thereof. A device (interface circuit) capable of redistributing program contents is revoked to easily prevent the program contents from being used illegally while the computer is being enabled except for some functions thereof.

### [Modification]

A modification to the above embodiment of the present invention will be described. The modification is characterized in that the power supply of the computer 10 is shut down when the computer 10 is revoked by a broadcast station. The modification is also characterized in that even though the power supply of the revoked computer 10 turns on, it can be shut down again without starting the operating system.

An operation of the computer 10, which is carried out when the BIOS 109a recognizes that the computer 10 is revoked by a broadcast station, will be described with reference to the flowchart shown in FIG. 12. Assume in the modification that when revocation information indicating that the computer 10 is revoked by a broadcast station is set in the RI register 509 in the RMP LSI 203, a revocation interrupt occurs in the BIOS 109a via the revocation control line 510.

Due to the revocation interrupt, the BIOS 109a recognizes that the computer 10 is revoked. The BIOS 109a stores revocation information indicating that the computer 10 is revoked, in the given storage area in the BIOS-ROM 109 (step S11). The BIOS 109a can read the revocation information out of the RI register 509 on a regular basis to recognize that the computer 10 is revoked.

When the BIOS 109a executes step S11, it causes the LCD 17 to display that the computer 10 is revoked and its power supply is shut down (step S12). After that, the BIOS 109a instructs the operating system to shut down the power supply (step S13).

Then, the power supply of the revoked computer 10 is forcibly shut down. This shutdown not only prevents program contents from being recorded or reproduced illegally in the computer, but also prevents program contents decrypted illegally in the computer 10 from being redistributed outside the computer 10. When the BIOS 109a executes step S13, it ends a process for the occurrence of a revocation interrupt, or a process for the revocation of the computer 10.

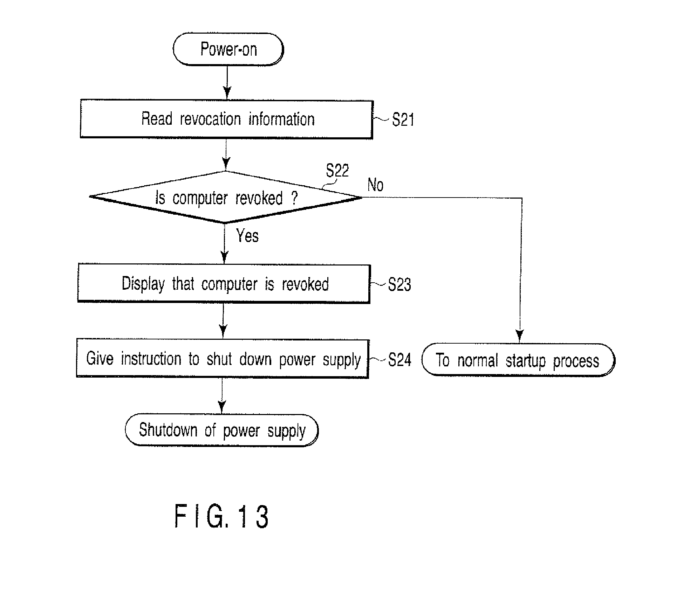

An operation of the BIOS 109a, which is performed when a user turns on the power supply of the revoked computer 10 after the power supply is forcibly shut down, will be described with reference to the flowchart shown in FIG. 13.

When the power supply of the computer 10 turns on, the BIOS 109a reads revocation information out of the given storage area of the BIOS-ROM 109 (step S21). As described above, the revocation information stored in the revocation information storage unit 502b of the flash EEPROM 502 is set in the RI register 509 by the RMP controller 501 when the power supply of the computer 10 turns on. The BIOS 109a can read revocation information from the RI register 509. In this case, the BIOS 109a need not necessarily store revocation information indicating that the computer 10 is revoked in the given storage area of the BIOS-ROM 109.

When the BIOS 109a reads revocation information, it determines whether the computer 10 is revoked on the basis of the revocation information (step S22). If the computer 10 is revoked, the BIOS 109a causes the LCD 17 to display that the computer 10 is revoked (step S23). After that, the BIOS 109a instructs the operating system to shut down the power supply of the computer 10 (step S24).

Then, though a user turns on the power supply of the revoked computer 10, the power supply is forcibly shut down without starting the operating system. This shutdown prevents program contents from being recorded or reproduced illegally in the computer 10, as in the case where the computer 10 is revoked. The shutdown also prevents program contents decrypted illegally in the computer 10 from being redistributed outside the computer 10.

## Claims

1. An information processing apparatus (10) **characterized by** comprising:
a digital television tuner module (204) configured to receive digital broadcast program data including encrypted program contents;
a plurality of devices (4, 110, 111, 113-116) which output data to an external device;
a bus which transfers data;
a descrambler (413) configured to decrypt the program contents included in the received digital broadcast program data;
an encryption unit (507) configured to encrypt the decrypted program contents using an encryption key and output the encrypted program contents onto the bus;
a storage unit (502b) which stores revocation information indicating that a revocation process to disable the information processing apparatus (10) from decrypting program contents by the descrambler (413) have been performed by a broadcast station which distributes digital broadcast program data; and
prevention means (109a, 800, 900, 920, 940, A10, A20, A30) for preventing, in accordance with the revocation information stored in the storage unit (502b), any one of the devices (4, 110, 111, 113-116) from redistributing program contents outside the information processing apparatus (10).

2. The information processing apparatus (10) according to claim 1, **characterized by** further comprising a controller (501) configured to store, in the storage unit (502b), revocation information indicating that the revocation process have been performed when the program contents are not decrypted legally by the descrambler (413).

3. The information processing apparatus (10) according to claim 1, **characterized in that** the devices (4, 110, 111, 113-116) include a communication interface (110, 111, 114-116) configured to perform communication between the information processing apparatus (10) and the external device.

4. The information processing apparatus (10) according to claim 1, **characterized in that** the devices (4, 110, 111, 113-116) include a display interface (4) configured to display different items of data including program contents on a display device.

5. The information processing apparatus (10) according to claim 1, **characterized in that** the devices (4, 110, 111, 113-116) include a data write device (113) which writes data to a detachable recording medium.

6. The information processing apparatus (10) according to claim 1, **characterized in that** the prevention means (109a, 800, 900, 920, 940, A10, A20, A30) includes revocation circuits (800, 900, 920, 940, A10, A20, A30) configured to revoke the devices (4, 110, 111, 113-116) in accordance with the revocation information stored in the storage unit (502b).

7. The information processing apparatus (10) according to claim 1, **characterized by** further comprising a decoder (701) configured to receive and reproduce the program contents output onto the bus, the decoder (701) including a decryption unit configured to decrypt the encrypted program contents,
wherein the prevention means (109a, 800, 900, 920, 940, A10, A20, A30) includes means (109a) for revoking the decoder (701) in accordance with the revocation information stored in the storage unit (502b).

8. The information processing apparatus (10) according to claim 1, **characterized in that** the prevention means (109a, 800, 900, 920, 940, A10, A20, A30) includes control means (109a) for controlling a shutdown of a power supply of the information processing apparatus (10) when the revocation information is stored in the storage unit (502b).

9. The information processing apparatus (10) according to claim 8, **characterized in that**:
the storage unit (502b) is secured in a given storage area of a nonvolatile storage device (502); and
the control means (109a) refers to the storage unit (502b) when the power supply of the information processing apparatus (10) turns on and controls the shutdown of the power supply when the revocation information is stored in the storage unit (502b).

10. The information processing apparatus (10) according to claim 1, **characterized by** further comprising:
a device identification information storage unit (502a) which stores device identification information to identify the information processing apparatus (10);
a first decoder (412) configured to generate a first encryption key; and
a second decoder (411) configured to generate a second encryption key,
wherein:
the digital broadcast program data further includes first information obtained by encrypting the first encryption key by the second encryption key, and second information obtained by encrypting the second encryption key by device identification information to identify each of authorized receiving terminals and corresponding to the device identification information;
the second decoder (411) generates the second encryption key by decoding the second information using the device identification information;
the first decoder (412) generates the first encryption key by decoding the first information using the second encryption key; and
the descrambler (413) decrypts the encrypted program contents by the first encryption key.

11. The information processing apparatus (10) according to claim 10, **characterized in that** information, which is unrelated to information obtained by encrypting the second encryption key using device identification information for identifying an unauthorized receiving terminal that distributes program contents illegally, is used to revoke the unauthorized receiving terminal as information included in the second information, which corresponds to the device identification information.

12. The information processing apparatus (10) according to claim 1, **characterized by** further comprising an LSI (203) configured to protect the program contents included in the received digital broadcast program data from unauthorized use, the LSI (203) including the descrambler (413), the encryption unit (507) and the storage unit (502b).

13. The information processing apparatus (10) according to claim 12, **characterized in that** the LSI (203) further includes a controller (501) configured to store revocation information indicating that the revocation process have been performed in the storage unit (502b) when the program contents are not decrypted legally by the descrambler (413).

14. A method of protecting encrypted program contents in an information processing apparatus (10) which includes a plurality of devices (4, 110, 111, 113-116) that output data to an external device and which receives digital broadcast program data including the encrypted program contents, the method **characterized by** comprising:
decrypting the program contents included in the received digital broadcast program data;
encrypting the decrypted program contents using an encryption key and outputting the encrypted program contents onto a bus;
storing revocation information in a nonvolatile storage unit (502b) when the program contents are not decrypted legally by the descrambler (413), the revocation information indicating that a revocation process to disable the information processing apparatus (10) from decrypting program contents have been performed by a broadcast station which distributes digital broadcast program data; and
preventing any one of the devices (4, 110, 111, 113-116) from redistributing program contents outside the information processing apparatus (10) in accordance with the revocation information stored in the storage unit (502b).
